(19) Europäisches Patentamt / European Patent Office / Office européen des brevets

(11) **EP 3 141 890 B1**

(12) **EUROPÄISCHE PATENTSCHRIFT**

(45) Veröffentlichungstag und Bekanntmachung des Hinweises auf die Patenterteilung:
**04.07.2018 Patentblatt 2018/27**

(51) Int Cl.:
***G01N 25/18*** *(2006.01)*

(21) Anmeldenummer: **15184450.3**

(22) Anmeldetag: **09.09.2015**

(54) **VERFAHREN ZUR BESTIMMUNG DER THERMISCHEN DIFFUSIVITÄT UND DER THERMISCHEN LEITFÄHIGKEIT VON FESTKÖRPERN**

METHOD FOR DETERMINING THE THERMAL DIFFUSION AND THERMAL CONDUCTIVITY OF SOLID BODIES

PROCEDE DE DETERMINATION DE LA DIFFUSIVITE THERMIQUE ET DE LA CONDUCTIVITE THERMIQUE DE CORPS SOLIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.03.2017 Patentblatt 2017/11**

(73) Patentinhaber: **Justus-Liebig-Universität Gießen**
**35390 Gießen (DE)**

(72) Erfinder:
• **Gather, Florian**
**85452 Moosinning (DE)**

• **Klar, Peter**
**35392 Gießen (DE)**

(74) Vertreter: **Stumpf, Peter**
**c/o TransMIT GmbH**
**Kerkrader Strasse 3**
**35394 Gießen (DE)**

(56) Entgegenhaltungen:
**US-A- 6 142 662     US-B1- 6 331 075**

**Beschreibung**

Die vorliegende Erfindung betrifft ein Verfahren zur Bestimmung der thermischen Diffusivität und der thermischen Leitfähigkeit von Festkörpern.

**Stand der Technik**

Die (spezifische) Wärmeleitfähigkeit, auch Wärmeleitzahl ($\lambda$, k oder $\kappa$) ist eine Stoffeigenschaft zur Berechnung der Wärmestromdichte aus dem Temperaturgradienten. Die Wärmeleitfähigkeit ist temperaturabhängig. Ihr Kehrwert ist der spezifische Wärmewiderstand.

Im Bereich von thermischen Transportprozessen wird auch häufig der Begriff der thermischen Welle verwendet. Der Begriff thermische Welle beschreibt ein räumlich und zeitlich veränderliches Temperaturfeld, das durch eine zeitabhängige Erwärmung in einem Medium hervorgerufen wird. Ohne Ruhelage und Rückstellkraft, wie bei Systemen, die einer Wellengleichung gehorchen, gibt es auch keine Schwingung, weshalb es sich bei einer "thermische Welle" nicht um eine klassische Welle handelt. Jedoch ist die mathematische Behandlung ähnlich. Mathematisch handelt es sich bei einer thermischen Welle um eine Lösung der Wärmeleitungsgleichung, einer Diffusionsgleichung.

Am Beispiel der thermischen Welle, die im homogenen, halbunendlichen und nur an der Oberfläche absorbierenden Körper bei harmonisch-periodischer und großflächiger Bestrahlung angeregt wird, lassen sich die wichtigsten Eigenschaften thermischer Wellen beschreiben und die physikalischen Größen und Parameter erkennen, die mittels thermischer Wellen der Messung zugänglich sind. Die durch die an der Oberfläche absorbierte Leistung $P_0$ hervorgerufene Temperaturschwankung $\Delta T(x,t)$ ist

$$(1)\quad \Delta T(x,t) = \Delta T_0(x) \cdot \cos(2\pi f t + \Delta \Phi(x))$$

Dabei ist:

$$(2)\quad \Delta T_0(x) = \frac{P_0}{e\sqrt{2\pi f}} \exp(-x/\mu)$$

$$(3)\quad \Delta \Phi(x) = -\frac{x}{\mu} - \frac{\pi}{4}$$

$$(4)\quad \mu = \sqrt{\frac{\alpha}{\pi f}}$$

Hierbei beschreibt e die thermischen Effusivität, Wärmeeindringkoeffizient

$$e = \sqrt{k\rho c}$$

Und $\alpha$ die thermische Diffusivität

$$\alpha = \frac{k}{\rho c}$$

Beide hängen von der Wärmeleitfähigkeit k, der Massendichte $\rho$ und der spezifischen Wärmekapazität *c* ab.

Derzeitige Messmethoden für die thermische Leitfähigkeit von Festkörpern gliedern sich in zwei Gruppen in zwar stationäre und transiente Methoden.

Bei instationären Temperaturfeldern wird oft anstelle der Wärmeleitfähigkeit die thermische Diffusivität (auch oft Temperaturleitfähigkeit genannt) betrachtet, die sich von der Wärmeleitfähigkeit durch die auf das Volumen bezogene Wärmekapazität unterscheidet. Beide Kenngrößen beschreiben, wie schnell sich Temperaturänderungen innerhalb eines Stoffes ausbreiten.

Stationäre Methoden arbeiten im stationären Gleichgewicht, die Wärmeleitfähigkeit wird direkt über das Fourier'sche Gesetz bestimmt. Der Nachteil sind hier die langen Wartezeiten zwischen den Messungen, bis das thermische Gleichgewicht erreicht ist.

Transiente Methoden also Nichtgleichgewichtsmethoden, z.B. die Ängström-Methode oder die Laser-Flash-Analysis, sind hier meist schneller, allerdings kann hier oft nur die thermische Diffusivität bestimmt werden, was eine weitere Messung der spezifischen Wärmekapazität nach sich zieht, um aussagekräftige Werte für die thermische Leitfähigkeit zu erlangen. Dies hat den Nachteil, dass die Proben mehrere Temperaturzyklen durchstehen müssen, ohne sich zu verändern. Außerdem eignet sich die Laser-Flash-Methode nur für hinreichend dünne Proben. 3-Omega-Messungen benötigen die Strukturierung eines Heizers auf der Probe und sind für elektrisch leitende Proben nur bedingt geeignet. Weiterhin ist die Aufbringung des Heizers nicht auf allen Proben möglich.

US 6 331 975 B1 beschreibt eine Vorrichtung und eine Methode zur Messung der thermischen Leitfähigkeit von dünnen Filmen.

US 6 142 662 A hingegen offenbart eine Einrichtung und ein Verfahren zur gleichzeitigen Bestimmung der thermischen Leitfähigkeit und des thermischen Übergangswiderstands einer Probe.

**Aufgabe**

Hiervon ausgehend liegt der Erfindung die Aufgabe zugrunde, ein Verfahren bereitzustellen, welches eine gleichzeitige Bestimmung der thermischen Diffusivität und der thermischen Leitfähigkeit von Festkörpern ermöglicht und schnell durchführbar ist.

**Lösung der Aufgabe**

Gelöst wird diese Aufgabe durch ein Verfahren mit den Merkmalen des Anspruchs 1. Vorteilhafte Ausführungsformen und Weiterbildungen der vorliegenden Erfindung ergeben sich aus den Unteransprüchen.

Im erfindungsgemäßen Verfahren zur gleichzeitigen Bestimmung der thermischen Diffusivität $\alpha$ und der thermischen Leitfähigkeit k von Festkörpern wird eine Probe 1 des zu untersuchenden Festkörpers in thermisch leitendende Verbindung mit einem Vergleichskörper 6, bei dem die thermischen Eigenschaften bekannt sind, gebracht. Dann wird unter Veränderung eines von einem Temperierungselement 2 ausgehenden und durch den Vergleichskörper (6) geführten und damit bekannten Wärmestroms zeitaufgelöst die Temperaturen T ($T_{4a}$, $T_{4b}$, $T_{4c}$) entlang des Weges des Wärmestromes durch den Vergleichskörper 6 und die Probe 1 an wenigstens drei Temperaturmesspunkten (4a, 4b, 4c) gemessen.

Dabei befindet sich wenigstens ein Temperaturmesspunkt 4a zwischen dem Temperierungselement 2 und dem Vergleichskörper 6, wenigstens ein Temperaturmesspunkt 4b zwischen dem Vergleichskörper 6 und der Probe 1, und wenigstens ein Temperaturmesspunkt 4c auf der dem Vergleichskörper 6 abgewandten Seite der Probe 1.

Gleichzeitige Bestimmung heißt, dass die thermische Diffusivität $\alpha$ und die thermischen Leitfähigkeit k der Probe aus den gleichen Messwerten bestimmt werden, so dass die Messung nicht wiederholt werden muss.

Thermisch gekoppelt bedeutet, dass ein Wärmestrom zwischen den Elementen erfolgen kann. Dies kann durch direkte Wärmeleitung und/oder indirekt durch Wärmestrahlung und/oder Konvektion erfolgen.

Die Veränderung des Wärmestromes erfolgt durch Heizen-/oder Kühlen des Vergleichskörpers 6 und der mit diesem thermisch gekoppelten Probe 1 durch das Temperierungselement 2.

Die die gemessenen Temperaturen, insbesondere die Temperatur $T_{4b}$ werden mit den zeitaufgelöst simulierten Temperaturwerten entlang des Weges des Wärmestromes durch den Vergleichskörper 6 und die Probe 1, verglichen. Wobei sich die simulierten Temperaturen aus den Werten der thermischen Diffusivität $\alpha$ und der thermischen Leitfähigkeit k der Probe 1 ergeben. Die Werte für der thermischen Diffusivität $\alpha$ und der thermischen Leitfähigkeit k welche in der Simulation sind prinzipiell frei wählbar.

Die Temperatur wird in der Simulation vorzugsweise durch das Lösen der allgemeinen inhomogenen Wärmeleitungsgleichung $\frac{\partial}{\partial t} T(x,T) = \frac{\alpha(x,T)}{\kappa(x,T)} \cdot \nabla \left[ \kappa(x,t) \cdot \nabla T(x,t) \right]$ bestimmt.

Anschließend wird die Abweichung $\chi$ der simulierten Temperaturverläufe und des gemessenen Temperaturverlaufs unter Variation der thermischen Diffusivität $\alpha$ und der thermischen Leitfähigkeit k der Probe 1 der Simulation berechnet.

Die thermischen Diffusivität $\alpha$ und die thermischen Leitfähigkeit k der Probe 1 ergeben sich aus dem Minimum der Abweichung $\chi$ für die verschiedenen Werte für die thermischen Diffusivität $\alpha$ und die thermischen Leitfähigkeit k.

In einer zweiten Ausführungsform weist das erfindungsgemäße Verfahren einen zusätzlichen Überprüfungsschritt auf. In diesem Schritt werden die ermittelten Werte für die thermischen Diffusivität $\alpha$ und der thermischen Leitfähigkeit k zufällig durch Addition eines Wertes $\Delta\alpha$ bzw. $\Delta$k verändert und die Simulation wiederholt, um zu überprüfen, ob das gefundene Minimum von $\chi$ ein globales Minimum ist. Das ist eine Überprüfung ob die gefundene Lösung mathematisch stabil ist. Typische Werte für $\Delta\alpha$ bzw. $\Delta$k liegen bei 10% von $\alpha$ bzw. k.

In einer dritten Ausführungsform des erfindungsgemäßen Verfahrens erfolgt Veränderung des Wärmestroms periodisch mit der Periodendauer $\tau$. Weiterhin wird der zeitliche Verlauf der Heizens-/oder Kühlens durch das Temperierungselement 2 in die verwendeten Gleichungen als eine Randbedingung $T(x, t)=T(x, t+\tau)$ für die Simulation verwendet. Optional erfolgt in dieser Ausführungsform zusätzlich noch eine Ausgleichsrechnung der gemessenen Temperaturen T ($T_{4a}$, $T_{4b}$, $T_{4c}$) an zeitliche Verlauf der Heizens-/oder Kühlens.

Die Methode der kleinsten Quadrate ist die am meisten verwendete Methode für die Ausgleichsrechnung. Es wird, eine Modellkurve durch eine Menge von Datenpunkten zu legen, so dass die Summe der Abstände der Punkte zur Kurve möglichst klein ist.

Wenn beispielsweise der Verlauf des Heizens-/Kühlens einen sinus-förmigen Verlauf hat, lässt sich der Temperaturverlauf allgemein in der Form $T(x,t) = A\left(\sin\left(\dfrac{2\pi t}{\tau + \varphi}\right)\right) + c$ beschreiben. Das ist die Funktion an die die Ausgleichrechnung erfolgt. Dies wird häufig auch als fitten bezeichnet.

Dadurch werden statistische Messungenauigkeiten bei der Temperaturmessung, ausgeglichen. Diese statistischen Messungenauigkeiten würden sonst zu einer Verfälschung der gewonnenen thermischen Parameter führen. Die Simulierten Temperaturwerte werden, dann im Weiteren mit den gefitteten Messwerten verglichen.

In einer vierten Ausführungsform des erfindungsgemäßen Verfahrens wird vor der Veränderung des Wärmestroms über wenigstens ein Temperierungselement 2 eine konstante Startemperatur To ($T_{04a}$, $T_{04b}$, $T_{04c}$) an den Temperaturmesspunkten (4a, 4b, 4c) eingestellt. So ist der Wärmestrom durch den Vergleichskörper 6 und die Probe 1 zum Startzeitpunkt konstant. Dann kann in der Simulation als Randbedingung zum Startzeitpunkt to angenommen werden, dass ein stationärer Zustand vorliegt das heißt, dass $\dfrac{\partial T}{\partial t} = 0$ gilt. Das vereinfacht dem Simulationsaufwand erheblich.

In einer fünften Ausführungsform des erfindungsgemäßen Verfahrens wird zusätzlich der Seebeck-Koeffizient der Probe 1 bestimmt wird, indem eine Messung der elektrischen Spannung U zwischen den Temperaturmesspunkten 4b und 4c und eine Weiterleitung zur Auswerteinheit erfolgt. Anschließend wird aus der Spannung und den Werten für die Temperaturen $T_{4a}$ und $T_{4b}$ der Temperaturmesspunkte 4b und 4c der Seebeck-Koeffizienten S bestimmt.

In der Thermospannung tritt immer nur die Differenz der Seebeck-Koeffizienten auf. Der gemessene Wert U muss also gegebenenfalls noch um die Thermospannung des Messgerätes der Spannungsmessung korrigiert werden um den Seebeck-Koeffizient der Probe 1 zu erhalten.

In einer sechsten Ausführungsform des erfindungsgemäßen Verfahrens wird zusätzlich die elektrische Leitfähigkeit $\sigma$ der Probe 1 bestimmt, indem der elektrische Widerstand der Probe 1 zwischen den Temperaturmesspunkten 4b und 4c gemessen wird.

Durch die Kombination der Messung von S und $\sigma$ kann dabei zusätzlich die dimensionslose *Kennzahl ZT*, die *figure of merit* bestimmt werden, welche für den Wirkungsgrad von thermoelektrischen Materialien und Bauelementen eine wichti-ge Kenngröße darstellt. Dabei gilt $ZT = \dfrac{S^2 \sigma T}{k}$

In einer siebten Ausführungsform des erfindungsgemäßen Verfahrens wird zusätzlich die Temperaturabhängigkeit der thermischen Diffusivität $\alpha$ und der thermischen Leitfähigkeit k bestimmt. Dazu wird zunächst die Differenz D der aktuellen Temperatur T am Ort des Temperaturmesspunktes 4b von der Starttemperatur To bestimmt. Sobald diese Differenz D einen Grenzwert G überschreitet die thermischen Diffusivität $\alpha$ und der thermischen Leitfähigkeit k neu bestimmt werden, wobei die aktuelle Temperatur T als neue Starttemperatur To verwendet wird.

Der Grenzwert G beträgt dabei bevorzugt 5K bis 15K.

In einer achten Ausführungsform des Verfahrens wird zusätzlich die Parameter Wärmeleitfähigkeit und Wärmekapazität der Probe temperaturabhängig bestimmt, indem ein fester Temperaturbereich Ta bis Tb am Ort des Temperaturmesspunktes (4b) festgelegt wird über den die Probentemperatur durch das Temperierungselement 2 erhöht und/oder abgesenkt werden wird. Weiterhin wird der Temperaturbereich $T_a$ bis $T_b$ in wenigstens zwei Abschnitte aufgeteilt. Anschließend wird innerhalb des jeweiligen Abschnittes die Parameter Wärmeleitfähigkeit $\alpha$ und Wärmekapazität k der Probe 1 bestimmt. Dies wird für alle Abschnitte wiederholt. Dies geschieht unter der Annahme, dass die Parameter sich nicht sprunghaft zwischen zwei Abschnitten ändern und die Probe eine im Wesentlichen einheitliche Temperatur aufweist. Zusätzlich können die Temperaturbereiche erneut aufgespalten werden, um eine höhere Temperaturauflösung zu erhalten.

Die verschiedenen Ausführungsformen des erfindungsgemäßen Verfahrens sollen die Merkmale oder Hauptelemente der Erfindung nicht auf je das spezifisches Ausführungsbeispiel des Verfahrens beschränken. Vielmehr können die verschiedenen Ausführungsformen des Verfahrens, durch einen Fachmann auf dem Gebiet auf verschiedene Arten kombiniert werden, um einen oder mehrere Vorteile der vorliegenden Erfindung zu erzielen.

Eine geeignete Vorrichtung zur Durchführung des Verfahrens an einer Probe 1 umfasst wenigstens ein Temperierungselement 2. Dies kann ein Heiz- oder Kühlelement sein, welches eine definierte thermische Koppelung mit der zu untersuchenden Probe aufweist. So kann diese gekühlt und/oder geheizt werden.

Weiterhin umfasst die Vorrichtung einen Vergleichskörper 6. Dieser Vergleichskörper 6 besteht aus einem Material für das die thermischen Diffusivität $\alpha_v$ und der thermischen Leitfähigkeit $k_v$ bekannt sind $\alpha_v$ und $k_v$ können in den folgenden Schritten als feste Parameter verwendet werden. Sowohl das Temperierungselement 2 und der Vergleichskörper 6 als auch der Vergleichskörper 6 und die Probe 1 sind miteinander thermisch gekoppelt.

Weiterhin umfasst die Vorrichtung einen oder mehrere Temperatursensoren zur Messung der Temperatur an wenigstens drei Temperaturmesspunkten 4a, 4b, 4c. Hierbei befindet sich sich wenigstens ein Temperaturmesspunkt 4a zwischen einem Temperierungselement 2 und einem Vergleichskörper 6, wenigstens ein Temperaturmesspunkt 4b zwischen dem Vergleichskörper 6 und der Probe 1 und wenigstens ein Temperaturmesspunkt 4c auf dem Vergleichskörper 6 abgewandten Seite der Probe. So kann zwischen den Temperaturmesspunkten 4a und 4b der Wärmestrom durch den Vergleichskörper 6 und zwischen den Temperaturmesspunkten 4a und 4b der Wärmestrom durch die Probe 1 bestimmt werden. Vorzugsweise ist der Vergleichskörper (6) zwischen dem Temperierungselement (2) und der Probe (1) angeordnet. Temperatursensoren können auf verschiedene Art und Weise aufgebaut sein. Gängige Vorrichtungen hierbei sind hier zum einen Wärmebildkameras. Diese haben den Vorteil, dass die berührungslose Messung keine zusätzlichen Wärmeströme verursacht. Alternativ möglich ist auch eine Messung über Widerstandsthermometer oder Thermoelemente. Diese weisen eine definierte d.h. wohlbekannte thermische Koppelung an die Probe auf und werden weniger durch das thermische Rauschen der Umgebung beeinflusst.

Die Temperatursensor(en) sind so ausgebildet, dass sie die Temperaturinformation von wenigsten drei Temperaturmesspunkten 4a, 4b, 4c in Echtzeit an eine Auswerteeinheit übermitteln können. Das kann über eine Funkstrecke oder über eine kabelgebundene Datenleitung erfolgen.

Die Vorrichtung umfasst bevorzugt noch eine Auswerteeinheit zur Bestimmung der thermischen Diffusivität und der thermischen Leitfähigkeit aus den Ortsdaten der Temperierungsbereiche, Ortsdaten der Temperaturmesspunkte (4a, 4b,4c)) sowie der zeitlichen Entwicklung die Temperatur an den Temperaturmesspunkten gemäß des erfindungsmäßen Verfahrens. Weiterhin ist die Auswerteeinheit bevorzugt so ausgebildet, dass sie Ergebnisse an ein Ausgabemittel übermitteln kann.

Ausgabemittel kann dabei ein Drucker, Plotter, Bildschirm o.ä. sein. (Sowohl die Auswerteinheit als auch die Ausgabeeinheit sind aus Übersichtlichkeitsgründen nicht abgebildet.)

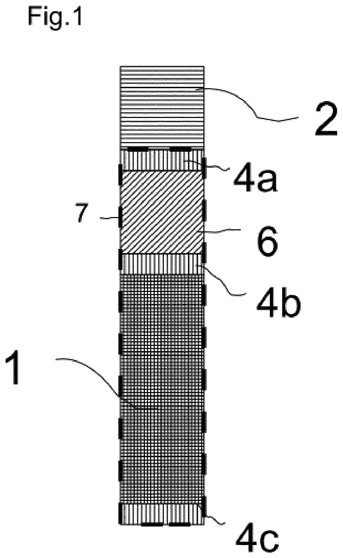

Eine mögliche Vorrichtung zur Durchführung des Verfahrens zeigt die Abbildung Fig.1.

Nach einem weiteren Aspekt betrifft die Erfindung ferner ein Computerprogramm zur Bestimmung der thermischen Diffusivität und der thermischen Leitfähigkeit zur Durchführung des zuvor beschriebenen Verfahrens. Das Computerprogramm ist insbesondere in der Auswerteeinheit implementierbar und dient der rechnerischen bzw. computergestützten Analyse der Temperaturdaten. Das Computerprogramm weist insoweit Programmmittel zum eindeutigen Zuordnen der zeitlichen Temperaturentwicklung zu den Positionen der Temperaturmessungen auf. Des Weiteren ist das Computerprogramm mit Programmmitteln zum Berechnen der thermischen Diffusivität und der thermischen Leitfähigkeit aus dem analytischen oder numerischen Modell versehen, welche Programmmittel dazu ausgestaltet sind, die thermischen Diffusivität und der thermischen Leitfähigkeit auf der Basis der Zuordnung der zeitlichen Temperaturentwicklung zu den Positionen der Temperaturmessungen zu berechnen. Dies erfolgt auf der Basis der Zuordnung der zeitlichen Temperaturentwicklung zu den Ortsdaten der Temperaturmessungen durch Lösung der Wärmeleitungsgleichung und der Bestimmung des Minimums, vorzugsweise des globalen Minimums der Abweichung $\chi$ der simulierten Temperaturwerte von den gemessenen Temperaturwerten.

Das Computerprogramm stellt insbesondere eine rechnergestützte Umsetzung des Verfahrens zur Bestimmung der thermischen Diffusivität und der thermischen Leitfähigkeit dar. Insoweit gelten sämtliche zum vorbeschriebenen Verfahren genannten Merkmale, Vorteile und Verfahrensschritte auch in gleicher Art und Weise für das Computerprogramm und umgekehrt.

Eine mögliche beispielhafte Ausgestaltung des Verfahrens zur gleichzeitigen Bestimmung der thermischen Diffusivität $\alpha$ und der thermischen Leitfähigkeit k von Festkörpern, umfasst mehrere folgende konkrete Schritte.

In einem ersten Schritt I werden die Ortsdaten ($x_{4a}$, $x_{4b}$, $x_{4c}$) von wenigstens drei Temperaturmesspunkten (4a, 4b, 4c), wobei sich wenigstens ein Temperaturmesspunkt 4a zwischen einem Temperierungselement 2 und einem Vergleichskörper 6, wenigstens ein Temperaturmesspunkt 4b zwischen dem Vergleichskörper 6 und der Probe 1, und wenigstens ein Temperaturmesspunkt 4c auf dem Vergleichskörper 6 abgewandten Seite der Probe 1 befindet, ermittelt. Anschließen werden diese Daten an eine Auswerteeinheit übermittelt.

Der Vergleichskörper 6 besteht aus einem Material für das die thermischen Diffusivität $\alpha_v$ und der thermischen Leitfähigkeit $k_v$ bekannt sind. $\alpha_v$ und $k_v$ können in den folgenden Schritten als feste Parameter verwendet werden.

In einem nächsten Schritt II wird über wenigstens ein Temperierungselement 2 eine Starttemperatur $T_0$ ($T_{04a}$, $T_{04b}$, $T_{04c}$) an den Temperaturmesspunkten (4a, 4b, 4c) eingestellt.

Anschließend wird in einem Schritt III die Temperatur der untersuchten Probe 1 über das Heizen-und oder Kühlen mit wenigstens einem Temperierungselement 2 verändert.

Parallel dazu erfolgt in einem Schritt IV eine zeitaufgelöste Messung der Temperatur T ($T_{4a}$, $T_{4b}$, $T_{4c}$) an den wenigstens drei Temperaturmesspunkten (4a, 4b, 4c) und eine Übermittlung an eine Auswerteeinheit.

Parallel zu den Schritt III und IV erfolgt ein Schritt Va). In diesem erfolgt eine Simulation der Temperaturen innerhalb eines Simulationsgebietes 7 für den Startzeitpunkt t=0, welcher nach Schritt II und vor Schritt III liegt. Das Simulationsgebietes 7 ist begrenzt ist durch die Temperaturmesspunkte 4a und 4c und ist, wenn das Problem eindimensional betrachtet wird eine Gerade durch den Vergleichskörper 6 und die Probe 1. Die Simulation erfolgt durch eine analytische oder numerische Modellierung des Simulationsgebietes 7 unter Verwendung der Schritt I bestimmten Ortsdaten ($\mathbf{x}_{4a}$, $\mathbf{x}_{4b}$, $\mathbf{x}_{4c}$) der Temperaturmesspunkte (4a, 4b, 4c), der in Schritt II eingestellten Starttemperatur $T_0$ ($T_{0,4a}$, $T_{0,4b}$, $T_{0,4c}$) und in und der bekannten thermischen Diffusivität $\alpha_v$ und der thermischen Leitfähigkeit $k_v$ des Vergleichskörpers 6. Dabei wird in diesem Schritt angenommen der Zustand zum startzeitpunkt to sei stationär d.h. $\frac{\partial T}{\partial t} = 0$. Die Temperatur innerhalb des Simulationsgebietes 7 wird nun durch das Lösen der allgemeinen inhomogenen Wärmeleitungsgleichung $\frac{\partial}{\partial t} T(x,T) = \frac{\alpha(x,T)}{\kappa(x,T)} \cdot \nabla[\kappa(x,t) \cdot \nabla T(x,t)]$ bestimmt. Dabei werden die Werte für die thermischen Diffusivität $\alpha$ und die thermischen Leitfähigkeit k der Probe 1, frei gewählt und können variiert werden.

Als numerische Modell wird insbesondere FEM (finite Elemente Methode)-Modelle oder FDM (Finite Differenzen Methode)-Modell verwendet. Der Temperaturentwicklung wird hierbei bevorzugt über eine eindimensionale Wärmeflussgleichung beschrieben. Das ist möglich, da sich der Wärmefluss in guter Näherung als ein eindimensionales Problem beschreiben lässt.

Anschließend erfolgt ein Schritt Vb). In diesem erfolgt eine zeitaufgelöste Simulation der Temperaturen innerhalb desselben Simulationsgebietes 7 wie in Schritt Va für den Zeitraum den Schritt III einnimmt. Die Simulation erfolgt durch eine analytische oder numerische Modellierung des Simulationsgebietes 7 unter Verwendung der in Schritt I bestimmten Ortsdaten ($\mathbf{x}_{4a}$, $\mathbf{x}_{4b}$, $\mathbf{x}_{4c}$), der Temperaturmesspunkte (4a, 4b, 4c), der in Schritt II eingestellten Starttemperatur $T_0$ ($T_{0,4a}$, $T_{0,4b}$, $T_{0,4c}$), der Simulationsergebnisse aus Schritt Va für den stationären Zustand und der bekannten thermischen Diffusivität $\alpha_v$ sowie der thermischen Leitfähigkeit $k_v$ des Vergleichskörpers 6. Die Temperatur innerhalb des Simulationsgebietes 7 wird dabei durch das Lösen der allgemeinen inhomogenen Wärmeleitungsgleichung $\frac{\partial}{\partial t} T(x,T) = \frac{\alpha(x,T)}{\kappa(x,T)} \cdot \nabla[\kappa(x,t) \cdot \nabla T(x,t)]$ bestimmt. Dabei sind die Werte für die thermischen Diffusivität $\alpha$ und die thermischen Leitfähigkeit k der Probe (1), frei wählbar sind und können variiert werden.

Anschließen werden in einem Schritt VI die in Schritt IV gemessenen Temperaturen am Temperaturmesspunkt 4b mit den Simulationsergebnissen aus Schritt V verglichen und aus der Differenz eine Gütefunktion $\chi$ als Maß für die Abweichung der gemessenen Temperaturen von den Simulationsergebnissen ermittelt.

Eine geeignete Gütefunktion ist die Summe der Quadrate der Abweichung der Temperaturen aus der Simulation $T_S$ und den gemessenen Temperaturen $T_M$ über alle i Messungen $X(\kappa, \alpha) = \sum i [T_S(t_i)^2 - T_M(t_i)^2]$. Andere Gütefunktionen sind möglich.

In einem letzten Schritt VI werden die Werte für die thermischen Diffusivität und der thermischen Leitfähigkeit der Probe aus dem Minimum von $\chi$ für die verschiedenen Werte für die thermischen Diffusivität $\alpha$ und die thermischen Leitfähigkeit k der Probe 1 durch die Minimierung der Gütefunktion $\chi$ mittels eines Minimierungsalgorithmus bestimmt. Dafür die Schritte Va, Vb, VI und VII, hierfür wiederholt ausgeführt und bei jeder Ausführung die angenommenen Werte für die thermischen Diffusivität $\alpha$ und die thermischen Leitfähigkeit k neu gewählt.

Einen geeigneten Minimierungsalgorithmus stellt das Brentverfahren da. Das Brent-Verfahren ist ein Verfahren der numerischen Mathematik zur iterativen Bestimmung einer Nullstelle, welches die Bisektion, das Sekantenverfahren (bzw. Lineare Interpolation) und die inverse quadratische Interpolation miteinander kombiniert. Aber auch andere Verfahren z.B. Newton-Verfahren sind möglich.

**Beschreibung der Figuren:**

Figur 1 zeigt schematisch einen möglichen Messaufbau zur Bestimmung der thermischen Diffusivität und der thermischen Leitfähigkeit einer Probe 1.

**Bezugszeichen**

1 Probe
2 Temperierungselement
4a, 4b, 4c Temperaturmesspunkt
6 Vergleichskörper
7 Simulationsgebiet

**Patentansprüche**

1. Verfahren zur gleichzeitigen Bestimmung der thermischen Diffusivität $\alpha$ und der thermischen Leitfähigkeit k von Festkörpern **dadurch gekennzeichnet, dass** eine Probe (1) des zu untersuchenden Festkörpers in thermisch leitendende Verbindung mit einem Vergleichskörper (6), bei dem die thermischen Eigenschaften bekannt sind, gebracht wird und unter Veränderung eines von einem Temperierungselement (2) ausgehenden und durch den Vergleichskörper (6) geführten und damit bekannten Wärmestroms zeitaufgelöst an wenigstens drei Temperaturmesspunkten (4a, 4b, 4c) entlang des Weges des Wärmestromes durch den Vergleichskörper (6) und die Probe (1) die Temperaturen T ($T_{4a}$, $T_{4b}$, $T_{4c}$) gemessenen werden, wobei sich wenigstens ein Temperaturmesspunkt (4a) zwischen dem Temperierungselement (2) und dem Vergleichskörper (6), wenigstens ein Temperaturmesspunkt (4b) zwischen dem Vergleichskörper (6) und der Probe (1), und wenigstens ein Temperaturmesspunkt (4c) auf der dem Vergleichskörper (6) abgewandten Seite der Probe (1) befindet, und anschließend die Temperaturen T ($T_{4a}$, $T_{4b}$, $T_{4c}$) mit den zeitaufgelöst simulierten Temperaturen am Weg des Wärmestromes durch den Vergleichskörper (6) und die Probe (1), verglichen werden, wobei sich die simulierten Temperaturen aus den Werten der thermischen Diffusivität $\alpha$ und der thermischen Leitfähigkeit k der Probe (1) ergeben, und die Abweichung $\chi$ der simulierten Temperaturen und des gemessenen Temperaturen unter Variation der thermischen Diffusivität $\alpha$ und der thermi-schen Leitfähigkeit k der Probe (1) in der Simulation bestimmt wird, wobei sich die thermischen Diffusivität $\alpha$ und die thermischen Leitfähigkeit k der Probe (1) aus dem Minimum der Abweichung $\chi$ für die verschiedenen Werte der thermischen Diffusivität $\alpha$ und der thermischen Leitfähigkeit k ergeben.

2. Verfahren zur gleichzeitigen Bestimmung der thermischen Diffusivität $\alpha$ und der thermischen Leitfähigkeit k von Festkörpern, gemäß Anspruch 1 **dadurch gekennzeichnet, dass** zu den ermittelten Werten für die thermische Diffusivität $\alpha$ und der thermischen Leitfähigkeit k zufällig ein Wert $\Delta\alpha$ bzw. $\Delta$k addiert werden und dann die Simulation wiederholt wird um zu testen, ob das gefundene Minimum von $\chi$ ein globales Minimum ist.

3. Verfahren zur gleichzeitigen Bestimmung der thermischen Diffusivität $\alpha$ und der thermischen Leitfähigkeit k von Festkörpern, gemäß Anspruch 1 oder 2, **dadurch gekennzeichnet, dass** die Veränderung des Wärmestroms periodisch mit der Periodendauer $\tau$ geschieht, wobei der zeitliche Verlauf als eine Randbedingung $T(x, t)=T(x, t+\tau)$ in der Simulation verwendet wird.

4. Verfahren zur gleichzeitigen Bestimmung der thermischen Diffusivität $\alpha$ und der thermischen Leitfähigkeit k von Festkörpern, gemäß Anspruch 3 **dadurch gekennzeichnet, dass** eine Ausgleichsrechnung der gemessenen Temperaturen T an den zeitlichen Verlauf der Veränderung des Wärmestroms erfolgt.

5. Verfahren zur gleichzeitigen Bestimmung der thermischen Diffusivität $\alpha$ und der thermischen Leitfähigkeit k von Festkörpern, gemäß einem der Ansprüche 1 bis 4 **dadurch gekennzeichnet, dass** vor der Veränderung des Wär-mestroms eine konstante Startemperatur $T_0$ ($T_{04a}$, $T_{04b}$, $T_{04c}$) an den Temperaturmesspunkten (4a, 4b,4c) eingestellt wird.

6. Verfahren zur gleichzeitigen Bestimmung der thermischen Diffusivität $\alpha$ und der thermischen Leitfähigkeit k von Festkörpern, gemäß einem der vorigen Ansprüche **dadurch gekennzeichnet, dass** der Seebeck-Koeffizient der Probe bestimmt wird, indem eine Messung der elektrischen Spannung U zwischen den Temperaturmesspunkten

(4b) und (4c) und eine Weiterleitung zur Auswerteinheit erfolgt und anschließend aus der Spannung und den Werten für die Temperaturen T4b und T4c der Temperaturmesspunkte (4b) und (4c) der Seebeck-Koeffizient S bestimmt wird.

**7.** Verfahren zur gleichzeitigen Bestimmung der thermischen Diffusivität $\alpha$ und der thermischen Leitfähigkeit k von Festkörpern, gemäß einem der vorigen Ansprüche **dadurch gekennzeichnet, dass** die elektrische Leitfähigkeit der Probe bestimmt wird, indem der elektrische Widerstand der Probe (1) zwischen den Temperaturmesspunkten (4b) und (4c) gemessen wird.

**8.** Verfahren zur gleichzeitigen Bestimmung der thermischen Diffusivität $\alpha$ und der thermischen Leitfähigkeit k von Festkörpern, gemäß einem der vorigen Ansprüche **dadurch gekennzeichnet, dass** weiterhin die Temperaturabhängigkeit der thermischen Diffusivität $\alpha$ und der thermischen Leitfähigkeit k bestimmt wird, indem zunächst die Differenz D der aktuellen Temperatur T am Ort des Temperaturmesspunktes (4b) von der Starttemperatur To am Ort des Temperaturmesspunktes (4b) bestimmt wird und sobald diese Differenz D einen Grenzwert G überschreitet, die thermischen Diffusivität $\alpha$ und die thermische Leitfähigkeit k neu bestimmt werden.

**9.** Verfahren zur gleichzeitigen Bestimmung der thermischen Diffusivität $\alpha$ und der thermischen Leitfähigkeit k von Festkörpern, gemäß Anspruch 8 **dadurch gekennzeichnet, dass** der Grenzwert G zwischen 5 K bis 15 K beträgt.

**10.** Verfahren zur gleichzeitigen Bestimmung der thermischen Diffusivität $\alpha$ und der thermischen Leitfähigkeit k von Festkörpern, gemäß einem der vorigen Ansprüche **dadurch gekennzeichnet, dass** weiterhin die Temperaturabhängigkeit der thermischen Diffusivität $\alpha$ und der thermischen Leitfähigkeit k bestimmt wird, indem zunächst ein fester Temperaturbereich Ta bis Tb am Ort des Temperaturmesspunktes (4b) festgelegt wird, über den die Probentemperatur durch das Temperierungselement (2) hinweg erhöht und/oder abgesenkt werden und weiterhin der Temperaturbereich Ta bis Tb in wenigstens zwei Temperaturabschnitte aufgeteilt wird, und die thermischen Diffusivität $\alpha$ und die thermischen Leitfähigkeit k für jeden Abschnitt separat bestimmt werden

**11.** Computerprogramm zur gleichzeitigen Bestimmung der thermischen Diffusivität und der thermischen Leitfähigkeit zur Durchführung eines Verfahrens nach einem der vorhergehenden Ansprüche 1 bis 10 **dadurch gekennzeichnet, dass** es Programmmittel zum Berechnen der thermischen Diffusivität und der thermischen Leitfähigkeit aus dem analytischen oder numerischen Modell aufweist, wobei die Programmmittel so ausgebildet sind, dass durch sie, die Berechnung der thermischen Diffusivität und der thermischen Leitfähigkeit auf der Basis der Zuordnung der zeitlichen Temperaturentwicklung zu den Ortsdaten der Temperaturmessungen durch Lösung der Wärmeleitungsgleichung und der Bestimmung des Minimums der Abweichung $\chi$ der simulierten Temperaturwerte von den gemessenen Temperaturwerten erfolgt.

**Claims**

**1.** Method for simultaneous determination of the thermal diffusivity $\alpha$ and thermal conductivity k of solids, **characterised in that** a sample (1) of the solid due to be examined is combined, in a thermally conductive manner, with a reference body (6) whose thermal properties are known, and the fact that, by changing a heat flow which is based on a temperature-controlling element (2) and which passes through the reference body (6), therefore making it known, the temperatures T ($T_{4a}$, $T_{4b}$, $T_{4c}$) are measured using temporal resolution at a minimum of three temperature-reading points (4a, 4b, 4c) along the course of the heat flow through the reference body (6) and sample (1), in which at least one temperature-reading point (4a) is located between the temperature-controlling element (2) and the reference body (6), at least one temperature-reading point (4b) is located between the reference body (6) and the sample (1), and at least one temperature-reading point (4c) is located on the side of the sample (1) facing away from the reference body (6), and the temperatures T ($T_{4a}$, $T_{4b}$, $T_{4c}$) are then compared with the temperatures simulated through temporal resolution along the course of the heat flow through the reference body (6) and sample (1). The temperatures here are the result of the thermal diffusivity $\alpha$ and thermal conductivity k of the sample (**1**), and the deviation $\chi$ of the simulated temperatures and measured temperatures is determined by varying the) thermal diffusivity $\alpha$ and thermal conductivity k of the sample (1) in the simulation, in which the thermal diffusivity $\alpha$ and thermal conductivity k of the sample (1) are the result of the minimum deviation $\chi$ for the various values of thermal diffusivity $\alpha$ and thermal conductivity k.

**2.** Method for simultaneous determination of the thermal diffusivity $\alpha$ and thermal conductivity k of solids according to claim 1, **characterised in that** a value $\Delta\alpha/\Delta k$ is added at random to the calculated values for thermal diffusivity $\alpha$

and thermal conductivity k, and the simulation then repeated to test whether the established minimum of $\chi$ is an overall minimum.

3. Method for simultaneous determination of the thermal diffusivity $\alpha$ and thermal conductivity k of solids according to either claim 1 or claim 2, **characterised in that** the heat flow changes periodically with a period $\tau$, in which the chronological sequence is used as a boundary condition $T(x, t)=T(x, t+\tau)$ in the simulation.

4. Method for simultaneous determination of the thermal diffusivity $\alpha$ and thermal conductivity k of solids according to claim 3, **characterised in that** error compensation is calculated for the measured temperatures T during the course of the heat-flow change.

5. Method for simultaneous determination of the thermal diffusivity $\alpha$ and thermal conductivity k of solids as per claims 1 to 4, **characterised in that** a constant starting temperature To (To4a, To4b, To4c) is set at the temperature-reading points (4a, 4b, 4c) before the heat flow is changed.

6. Method for simultaneous determination of the thermal diffusivity $\alpha$ and thermal conductivity k of solids according to any one of the previous claims, **characterised in that** the Seebeck coefficient of the sample is determined by measuring the voltage U between the temperature-reading points (4b) and (4c) and forwarding this to the evaluation unit. The Seebeck coefficient S is then calculated using the voltage and values for the temperatures T4b and T4c at the temperature-reading points (4b) and (4c).

7. Method for simultaneous determination of the thermal diffusivity $\alpha$ and thermal conductivity k of solids according to any one of the previous claims, **characterised in that** the electrical conductivity of the sample is determined by measuring the) electrical resistance of the sample (1) between the temperature-reading points (4b) and (4c).

8. Method for simultaneous determination of the thermal diffusivity $\alpha$ and thermal conductivity k of solids according to any one of the previous claims, **characterised in that** the temperature-dependence of the thermal diffusivity $\alpha$ and thermal conductivity k continues to be determined by initially calculating the difference D between the current temperature T at the temperature-reading point (4b) and the starting temperature To at the temperature-reading point (4b), and then once this difference D exceeds a limit value G, re-defining the thermal diffusivity $\alpha$ and thermal conductivity k.

9. Method for simultaneous determination of the thermal diffusivity $\alpha$ and thermal conductivity k of solids according to claim 8, **characterised in that** the limit value G is between 5 K and 15 K.

10. Method for simultaneous determination of the thermal diffusivity $\alpha$ and thermal conductivity k of solids according to any one of the previous claims, **characterised in that** the temperature-dependence of the thermal diffusivity $\alpha$ and thermal conductivity k continues to be determined by initially establishing a fixed temperature range Ta to Tb at the temperature-reading point (4b), which is used to increase and/or decrease the sample temperature via the temperature-controlling element (2), and splitting the temperature range Ta to Tb into at least two temperature segments, then determining the thermal diffusivity $\alpha$ and thermal conductivity k separately for each segment.

11. A computer program for simultaneous determination of the thermal diffusivity $\alpha$ and thermal conductivity k in order to perform a method according to any one of the aforementioned claims 1 to 10, **characterised in that** it has the program resources to calculate thermal diffusivity and thermal conductivity based on the analytical or numeric model, in which said resources are such that they enable thermal diffusivity and thermal conductivity to be calculated based on allocating chronological temperature development to the local temperature-reading data by solving the heat-conduction equation and determining the minimum deviation $\chi$ of the simulated temperature values from the measured temperature values.

**Revendications**

1. Procédé pour la détermination simultanée de la diffusivité thermique $\alpha$ et de la conductivité thermique **k** de corps solides, **caractérisé en ce qu'**un échantillon (1) du corps solide à examiner est mis en contact thermique avec un matériau de référence (6) dont les propriétés thermiques sont connues, et qu'une mesure de températures ($T_{4a}$, $T_{4b}$, $T_{4c}$) résolue dans le temps est effectuée, en appliquant une variation d'un flux thermique émanant d'un élément de régulation thermique (2), qui traverse le matériau de référence (6) et qui est ainsi connu, dans au moins trois

EP 3 141 890 B1

points de mesure de température (4a, 4b, 4c) le long du cheminement du flux de chaleur à travers le matériau de référence (6) et l'échantillon (1), avec au moins un point de mesure de température ($T_{4a}$) se trouvant entre l'élément de régulation thermique (2) et le matériau de référence (6), et au moins un point de mesure de température ($T_{4b}$) se trouvant entre le matériau de référence (6) et l'échantillon (1), et au moins un point de mesure de température ($T_{4c}$) se trouvant sur la face de l'échantillon (1) qui est opposée au matériau de référence (6) et que finalement les températures T ($T_{4a}$, $T_{4b}$, $T_{4c}$) soient comparées avec des températures simulées avec une résolution temporelle sur le cheminement du flux de chaleur à travers le matériau de référence (6) et l'échantillon (1) où les températures simulées sont dérivées des valeurs de la diffusivité thermique $\alpha$ et de la conductivité thermique **k** de l'échantillon (1) et où l'écart $\chi$ entre températures simulées et mesurées est déterminé par la variation de la diffusivité thermique $\alpha$ et de la conductivité thermique **k** de l'échantillon (1) dans la simulation et où la diffusivité thermique $\alpha$ et la conductivité thermique **k** de l'échantillon (1) découlent du minimum de l'écart $\chi$ pour les différentes valeurs de la diffusivité thermique $\alpha$ et de la conductivité thermique **k** de l'échantillon (1).

2. Procédé pour la détermination simultanée de la diffusivité thermique $\alpha$ et de la conductivité thermique **k** de corps solides selon la revendication 1, **caractérisé en ce qu'**une valeur aléatoire $\Delta\alpha$ ou $\Delta k$ soit additionnée aux valeurs déterminées de la diffusivité thermique $\alpha$ et de la conductivité thermique **k** et que la simulation est répétée afin de tester si le minimum de $\chi$ trouvé est un minimum global.

3. Procédé pour la détermination simultanée de la diffusivité thermique $\alpha$ et de la conductivité thermique **k** de corps solides selon la revendication 1 ou 2, **caractérisé en ce que** la variation du flux de chaleur se fasse périodiquement avec la durée de la période $\tau$ et que la courbe temporelle est utilisée comme condition limite T(x, t)=T(x, t+$\tau$) dans la simulation.

4. Procédé pour la détermination simultanée de la diffusivité thermique $\alpha$ et de la conductivité thermique **k** de corps solides selon la revendication 3, **caractérisé en ce qu'**un calcul de compensation des températures mesurées T par rapport à l'évolution de la variation du flux de chaleur est effectué.

5. Procédé pour la détermination simultanée de la diffusivité thermique $\alpha$ et de la conductivité thermique **k** de corps solides selon les revendications 1 à 4, **caractérisé en ce qu'**une température initiale constante $T_0$ ($T_{04a}$, $T_{04b}$, $T_{04c}$) est établie aux points de mesure de température (4a, 4b, 4c).

6. Procédé pour la détermination simultanée de la diffusivité thermique $\alpha$ et de la conductivité thermique **k** de corps solides selon une des revendications précitées, **caractérisé en ce que** le coefficient de Seebeck de l'échantillon soit déterminé par une mesure de la tension électrique U entre les points de mesure de température (4b) et (4c), qu'elle soit transmise à l'unité d'évaluation et finalement la détermination du coefficient de Seebeck S ait lieu à partir de la tension et les valeurs des températures T4B et T4C des points de mesure de température (4b) et (4c).

7. Procédé pour la détermination simultanée de la diffusivité thermique $\alpha$ et de la conductivité thermique **k** de corps solides selon une des revendications précitées, **caractérisé en ce que** la conductivité électrique de l'échantillon est déterminée par la mesure de la résistance électrique de l'échantillon (1) entre les points de mesure de température (4b) et (4c).

8. Procédé pour la détermination simultanée de la diffusivité thermique $\alpha$ et de la conductivité thermique **k** de corps solides selon une des revendications précitées, **caractérisé en ce que** la dépendance de la diffusivité thermique $\alpha$ et de la conductivité thermique k par rapport à la température est déterminée, en déterminant d'abord la différence D entre la température actuelle T à l'endroit du point de mesure de température (4b) et la température initiale T0 à l'endroit du point de mesure de température (4b) et en déterminant de nouveau la diffusivité thermique $\alpha$ et la conductivité thermique **k** dès que cette différence D dépasse une valeur limite G.

9. Procédé pour la détermination simultanée de la diffusivité thermique $\alpha$ et de la conductivité thermique **k** de corps solides selon la revendication 8, **caractérisé en ce que** la valeur limite G s'élève à une valeur entre 5 K et 15 K.

10. Procédé pour la détermination simultanée de la diffusivité thermique $\alpha$ et de la conductivité thermique k de corps solides selon une des revendications précitées, **caractérisé en ce que** la dépendance de la diffusivité thermique $\alpha$ et de la conductivité thermique **k** par rapport à la température est déterminée en définissant d'abord une plage de température fixe Ta à Tb au lieu du point de mesure de température (4b) dans laquelle la température de l'échantillon est augmentée et/ou diminuée par l'élément de régulation thermique (2) et en découpant la plage de température Ta à Tb en au moins deux gammes de température et en déterminant la diffusivité thermique $\alpha$ et la

conductivité thermique **k** séparément pour chaque gamme.

11. Logiciel informatique pour la détermination simultanée de la diffusivité thermique $\alpha$ et de la conductivité thermique **k** de corps solides pour la mise en oeuvre d'un procédé selon une des revendications 1 à 10, **caractérisé en ce que** le logiciel dispose de moyens de programme pour le calcul de la diffusivité thermique et de la conductivité thermique à partir du modèle analytique ou numérique, les moyens du programme étant conçus de manière à ce que le calcul de la diffusivité thermique et de la conductivité thermique se fait sur la base de l'attribution de l'évolution temporelle de la température aux données locales des mesures de température par la résolution de l'équation de la chaleur et la détermination du minimum de l'écart X entre les valeurs de température simulées et les températures mesurées.

Fig.1

2

4a

7

6

4b

1

4c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6331975 B1
- US 6142662 A